# EUROPEAN PATENT SPECIFICATION

(11) **EP 3 419 734 B1**
(45) Date of publication and mention of the grant of the patent: **15.04.2020**
(21) Application number: 17714283.3
(22) Date of filing: 22.02.2017
(51) Int. Cl.: B01D 35/143, B01D 35/147, B01D 27/10, F02M 37/22

(54) **DELAYED-ACTION BYPASS VALVE**
VERZÖGERUNGSUMGEHUNGSVENTIL
VANNE DE DETOURNEMENT A REACTION RETARDE

(30) Priority: 25.02.2016 IT UB20161064
(43) Date of publication of application: 02.01.2019
(73) Proprietor: Ufi Filters s.p.a., 46047 Porto Mantovano (Mantova) (IT)
(72) Inventor: GIRONDI, Giorgio, I-46100 Mantova (IT)
(74) Representative: Corradini, Corrado
(86) International application number: PCT/IB2017/050997
(87) International publication number: WO 2017/145060

(56) References cited:
- EP-A2- 1 443 206
- WO-A1-82/02622
- DE-A1- 3 632 655
- DE-A1-102012 009 999

## Description

### TECHNICAL FIELD

The present invention relates to a bypass valve for fluids, in particular a delayed-action bypass valve.

### PRIOR ART

As is known, in the motor vehicle field, internal combustion engines include a lubrication system in which a lubricating fluid circulates, generally oil, which is pumped through channels realised in the engine body, so as to lubricate the mobile parts of the engine.

The lubrication system generally includes a filter group provided with a filter wall able to filter the lubricating fluid from the particulate material which might be present therein. When the filter walls clog up, in order to avoid over-forcing the pump, the walls are temporarily bypassed until the filter wall itself is replaced. To bypass the filter wall the lubrication system generally comprises a bypass valve, for example which can be arranged in the filter group itself.

A problem existing in lubrication systems is due to the fact that on first use of the engine, there might be residues of machining still present (powders, solid residues, various particles, etc.). Therefore, on the first test run of the engine, when the engine is typically run for a brief time in order to ensure that the engine is functioning correctly, the lubricating fluid is typically cold and therefore more viscous and this causes a temporary increase in load loss (i.e. a perceived increase in pressure, i.e. a greater resistance) through the filter wall. This increased resistance through the filter wall can cause opening of the bypass valve which should normally be closed, as the filter wall is not blocked, thus enabling the lubricating fluid (containing the working residues) to enter into circulation, unfiltered, in the lubricating system. When the lubricating fluid heats up sufficiently its viscosity falls (and with it also the load loss at the filter wall drops) and the bypass valve closes.

To obviate this drawback use is known of delayed-action bypass valves, for example of the type described in prior documents US6592047, US6544412 and DE102004046580. DE 36 32 655 A1 shows a bypass valve functioning dependent on the fluid temperature.

An aim of the present invention is to disclose a delayed-action bypass valve that is an alternative and improved with respect to the known delayed-action bypass valves, in order to obviate the above-described technical problem with a solution that is simple, rational, compact and formed by a small number of components, and relatively inexpensive.

Further, an aim of the present invention is to block opening of the bypass valve each time, during the life of the valve itself, it is not caused by a real blockage of the filter wall.

The aims are attained by the characteristics of the invention as reported in the independent claim. The dependent claims delineate preferred and/or particularly advantageous aspects of the invention.

### DESCRIPTION OF THE INVENTION

In particular, the invention discloses a bypass valve, comprising:
- a housing provided with an inlet opening for a fluid, an outlet opening for the fluid and a chamber interposed between the inlet opening and the outlet opening;
- a first obturator, mobile between a closed position of the outlet opening and an open position of the outlet opening, as a function of a pressure value of the fluid internally of the chamber; and
- a second obturator, mobile between a closed position of the inlet opening and an open position of the inlet opening, as a function of a temperature value of the fluid.

With this solution, the bypass valve, or rather its housing, can be completely closed and inaccessible for the non-filtered fluid until the temperature of the fluid reaches a determined threshold value, while at the same time preventing solid residues from being positioned in proximity of the bypass valve.

In particular, the second obturator is configured to be positioned in the closed position of the inlet opening when the temperature of the fluid being filtered is lower than a predetermined threshold value thereof and in the open position of the inlet opening when the temperature of the fluid being filtered is equal to or greater than said predetermined threshold value.

Due to such solution, the chamber of the housing of the bypass valve, interposed between the inlet opening and the outlet opening, is not accessible for the fluid being filtered until the temperature of the fluid itself exceeds (from lower temperatures) the predetermined threshold value, i.e. possible machining residues that could be present in the fluid being filtered prevented from being sent to the bypass valve, that is accessing the chamber thereof, thus preventing them from being able to go directly into the lubrication circuit downstream of the filter if the pressure of the filtration fluid should exceed the bypass valve opening value. One aspect of the invention also provides that the bypass valve can comprise a first thrust element, for example a spring, exerting a predetermined thrust force on the first obturator so as to push the first obturator into the closed position thereof.

With this solution, the opening of the first obturator can take place as a consequence of an increase of pressure in the upper housing chamber that is greater than the pressure exerted by the thrust force on the first obturator.

In a further aspect of the invention, the bypass valve comprises an actuator group connected to the second obturator and configured so as to enable movement of the second obturator between the closed position and the open position thereof as a function of the temperature of the fluid.

With this solution, the opening and closing of the second obturator can be easily commanded, for example, in an autonomous and reversible way. In particular, each time the fluid temperature is lower than the threshold value, the second obturator can be made to the actuator group in the closed position and, vice versa, each time the temperature of the fluid is greater than the threshold value the second obturator can be brought to the actuator group into the open position.

In practice, the second obturator (and its actuator group) is configured in a manner such that in the closed position it prevents the passage of fluid from the inlet opening to the chamber and in the open position it allows the passage of fluid from the inlet opening to the chamber.

In practice, the second obturator (and its actuator group) is configured in a manner such that in the closed position it prevents the access of fluid to the chamber (413) and in the open position it allows the fluid to access the chamber (413).

In an aspect of the invention, the actuator group can comprise a heat-sensitive element provided with a heat-extensible body.

With this solution, the detecting of the temperature of the fluid can be done simply and without the use of sensors.

In a further aspect of the invention, the actuator group can comprise an expansion chamber fixed to the housing and a piston slidably coupled to the expansion chamber between a retracted position and an extracted position thereof, and connected to the second obturator, wherein the piston is activated in sliding by the heat-extensible body between the retracted position, corresponding to the closed position of the second obturator and the extracted position, corresponding to the open position of the second obturator.

With this solution, the movement of the second obturator as a function of the fluid temperature can be made simply, reversibly and safely.

In an alternative aspect of the invention, the heat-extensible body can comprise a shape-memory body an end of which is fixed to the second obturator and a second end of which is fixed to the housing.

In a further aspect of the invention, having the same aims and advantages as described in the foregoing, a filter group for filtering a fluid comprises an external casing provided with an inlet and an outlet, a filter cartridge contained internally of the external casing able to separate the internal volume of the external casing into a first chamber communicating with the inlet and a second chamber communicating with the outlet, so as to filter the fluid that flows from the inlet towards the outlet, and a bypass valve, according to any one of the preceding claims, wherein the inlet opening of the bypass valve is arranged in the first chamber (and/or in fluid communication therewith) and the outlet opening is arranged in the second chamber (and/or in fluid communication therewith).

The housing of the bypass valve can advantageously be fixed to at least a portion of the external casing of the filter group or defined in a single body therewith.

With this solution, the bypass valve is compact and simple to assemble. Alternatively, the housing of the bypass valve can be fixed to at least a portion of the filter cartridge of the filter group (or in a single body therewith).

### BRIEF DESCRIPTION OF THE DRAWINGS

Further characteristics and advantages of the invention will emerge from a reading of the following description, provided by way of non-limiting example with the aid of the figures illustrated in the appended tables of drawings.
Figure 1 is an axonometric view of a filter group according to the invention.
Figure 2 is a section view along the line of section II-II of figure 1.
Figure 3 is a larger-scale detail of figure 2, with the bypass valve in a first operating position.
Figure 4 is a larger-scale detail of the bypass valve of figure 3.
Figure 5 is a larger-scale detail of figure 3, with the bypass valve in a second operating position.
Figure 6 is a larger-scale detail of the bypass valve of figure 5.
Figure 7 is a larger-scale detail of figure 3, with the bypass valve in a third operating position.
Figure 8 is a larger-scale detail of the bypass valve of figure 7.
Figure 9 is a larger-scale detail of an alternative embodiment of the filter group according to the invention.
Figure 10 is a larger-scale detail of a further embodiment of the filter group according to the invention.
Figure 11 is a larger-scale detail of a further embodiment of the actuator group of the bypass valve according to the invention.
Figure 12 is a longitudinal section view of an alternative embodiment of the bypass valve according to the invention, in which the second obturator is in a first operating position.
Figure 13 is a longitudinal section view of the bypass valve of figure 12, with the second obturator in a second operating position.
Figure 14 is a longitudinal section view of the bypass valve of figure 13, with the bypass valve in a third operating position.

### BEST WAY OF CARRYING OUT THE INVENTION

With particular reference to the figures, reference numeral 10 denotes in its entirety a filter group, for example for a lubricating fluid (for example oil) or another fluid used in the motor vehicle sector.

The filter group 10 comprises an external casing 20, denoted in its entirety by reference numeral 20, which in turn comprises a filter group 21 and a cover 22 able to close the beaker body 21.

The cover 22 (upper in the figure) is conformed, in the example, substantially as a cap (having a circular section) and has a threading (external) able to be screwed in a corresponding threading (internal) defined on the open edge of the beaker body 21.

A seal ring 23 can further be interposed between the cover 22 and the beaker body 21.

The filter group 21 has a longitudinal axis L (substantially central), for example coaxial to the screwing axis between the cover 22 and the beaker body 21.

At least an inlet conduit 210 of the fluid to be filtered and an outlet conduit 211 of the filtered fluid are defined in the beaker body 21, for example at an attachment flange integral therewith and able to be coupled to the motor body, not shown in the figures (for example by mean of threaded organs).

In the example, the inlet conduit 210 opens (i.e. terminates with an opening) in a lateral wall of the beaker body 21 while the outlet conduit 211 opens (i.e. begins with an opening) at a bottom wall (opposite the cover 22) of the beaker body 21, for example preferably in a central position.

In the example the bottom wall of the beaker body 21 is substantially circular and the opening with which the outlet conduit 211 begins, also circular, is coaxial with the bottom wall.

The outlet conduit 211, at the start opening thereof, comprises a threaded portion 212 (with an internal threading).

It is possible that alternatively the inlet conduit and/or the outlet conduit can be made in the cover 22 of the external casing 20.

The filter group 10 comprises a filter cartridge, denoted in its entirety by reference numeral 30, which can be accommodated internally of the external casing 20.

The filter cartridge 30 overall has a substantially toroidal shape.

For example, the filter cartridge 30 is coaxially housed internally of the external casing 20.

The filter cartridge 30 is interposed between the inlet conduit 210 and the outlet conduit 211, as will be more fully described in the following, in such a way as to filter the fluid that enters the external casing 20 from the inlet conduit 210 and flows towards the outlet conduit 211.

The filter cartridge 30 comprises a first support plate 31 (upper) and, for example, a second support plate 32 (lower) which are fixed to the opposite ends of a filter wall 33 having a tubular (toroidal) shape, which defines and delimits a substantially cylindrical internal volume (coaxial with the longitudinal axis L of the external casing 20 and/or the beaker body 21).

The filter wall 33 for example can be a filter wall of the pleated type or a porous depth wall.

The first support plate 31 ha a substantially annular shape.

The first support plate 31 has a central hole 310, for example delimited by a substantially cylindrical central shank, which is preferably substantially circular and is centred on the axis of the filter wall 33.

The central shank and therefore the central hole 310 can support an annular seal, for example internal.

The second support plate 32 also has a substantially annular shape.

The first support plate 32 has a central hole 320, for example delimited by a substantially cylindrical central shank, which is preferably substantially circular and is centred on the axis of the filter wall 33.

The central shank and therefore the central hole 320 can support an annular seal, for example two, of which an internal and an external annular seal.

The filter group 10 can also comprise a support core 34 (for example made of a substantially rigid material) able to support the filter cartridge 30, in particular the filter wall 33 thereof.

The support core 34 is preferably inserted, for example substantially coaxially, internally of the filter wall 33, and is provided with through-holes (in a radial direction) for passage of the fluid being filtered.

In the example, the support core 34 comprises a threaded shank 340, at an end, for example a lower end, thereof.

The threaded shank 340 can be screwed to the threaded portion 212 of the outlet conduit 211 of the external casing 20.

Therefore in the example the support core 34 can define, once assembled, a portion of the external casing 20 of the filter group 20.

It is possible for the support core 34 to be fixed, for example rigidly and solidly, to the filter cartridge 30 so as to define, in fact, a portion thereof.

The support core 34, for example, comprises a first cylindrical body 341 (with a slim wall), the external diameter of which is substantially equal to or slightly smaller than the internal diameter of the filter wall 33 and/or of the central hole 320 of the second support plate 32 and/or of the central hole 310 of the first support plate 31, so as to be able to substantially snugly insert in the internal volume of the filter cartridge 30.

The first cylindrical body 341 is provided with through-holes (in a radial direction) for passage of the fluid being filtered.

The support core 34, in particular the first cylindrical body 341 thereof, has for example a length that is substantially equal to or a little longer than the length of the filter wall 33.

In practice, the support core 34 in the illustrated example projects axially from the filter cartridge 30 only at the threaded shank 340.

The support core 34, in particular the first cylindrical body 341 thereof, is substantially sealedly inserted in the central hole 320 of the second support plate 32 (by means of the annular internal seal).

In the example the support core 34 comprises a substantially cylindrical second cylindrical body 342 (having a slim wall), which is coaxial to the first cylindrical body 341 and is arranged internally thereof.

The external diameter of the second cylindrical body 342 is (much) smaller than the internal diameter of the first cylindrical body 341, so as to delimit an annular gap between the first cylindrical body 341 and the second cylindrical body 342, and the internal diameter is substantially equal to the internal diameter of the threaded shank 340.

The second cylindrical body 342, for example, does not exhibit through-holes (in a radial direction) for the passage of the fluid being filtered, but is open at the axially open ends.

The second cylindrical body 342 has an end (lower) constrained to the first cylindrical body 341, for example in proximity of the threaded shank 340, and an opposite free end, defining the axially open end of the second cylindrical body 342.

In practice, the support core 34, constituted by the first cylindrical body 341, the second cylindrical body 342 and the threaded shank 340, is made in a single body.

The free end of the second cylindrical body 342 is distanced from the threaded shank 340 by a smaller distance than the distance between the free end of the first cylindrical body 341 and the threaded shank itself.

In other words, the second cylindrical body 342 has a shorter length than first cylindrical body 341 and the free ends (upper) than the first cylindrical body 341 and the second cylindrical body 342 are staggered so that the free end of the second cylindrical body 342 is radially superposed on an intermediate portion of the internal cavity of the first cylindrical body 341 (and therefore of the internal cavity of the filter wall 33).

When the filter cartridge 30 is inserted internally of the external casing 20 it subdivides the internal volume of the external casing 20 into two distinct chambers that communicate (only) via the filter wall 33 (i.e. the porosity thereof).

In practice, the filter cartridge 30 internally of the external casing 20 subdivides the internal volume of the external casing 20 into a first chamber A (of the fluid to be filtered or the dirty fluid) communicating with the inlet conduit 210 and a second chamber B (of the filtered fluid or the clean fluid) communicating with the outlet conduit 211.

In practice, the first chamber A is a toroidal chamber defined externally of the filter cartridge 30 (i.e. the filter wall 33), between the filter cartridge 30 and the external casing 20, and the second chamber B is a substantially cylindrical chamber (with one or more sectors) defined internally of the filter cartridge 30, for example internally of the support core 34 (i.e. internally of the first cylindrical body 341 and the second cylindrical body 342).

The filter group 10 comprises a bypass valve 40.

The bypass valve 40 is configured for bypassing the filter wall 33 and directly places the inlet conduit 210 in fluid communication with the outlet conduit 211 when required, i.e. when the filter wall 33 is obstructed or clogged.

The bypass valve 40 comprises a housing 41, for example substantially rigid. The housing 41 comprises, for example, a cylindrical body 410 (internally hollow), for example having a slim wall that is open at the axial ends thereof. The housing 41 comprises at least an inlet opening 411, which for example is realised at an axial portion of the cylindrical body 410.

The inlet opening 411 is for example a radial opening.

For example the inlet opening 411 is defined by a through-slit (radial) made in the (lateral) wall of the cylindrical body 410, for example at an axially intermediate portion between the opposite ends thereof.

In the example, the cylindrical body 410 comprises a plurality of inlet openings 411, for example aligned along an imaginary circumference that is coaxial with the cylindrical body 410.

In practice, all the inlet openings 411 are substantially at a same axial height relative to the cylindrical body 410.

The housing 41 comprises at least an outlet opening 412, which for example is realised at a further axial portion of the cylindrical body 410, different from the axial portion in which the inlet opening 411 is realized.

For example, the outlet opening 412 is defined at an end (lower) of the cylindrical body 410.

The outlet opening 412 is for example an axial opening.

The housing 41 comprises an internal chamber 413, which for example is axially interposed between the inlet opening 411 and the outlet opening 412 and is delimited perimetrally by the internal wall of the cylindrical body 410. The housing 41 can comprise a first cladding wall 414 located at an end (lower) of the cylindrical body 410, which is for example fixed to the cylindrical body 410.

The first cladding wall 414, in practice, defines a bottom wall of the cylindrical body 410.

The first cladding wall 414 comprises a through-hole, for example central, which in fact defines the outlet opening 412 of the housing 41, which for example has a smaller diameter than the internal diameter of the cylindrical body 410.

The first cladding wall 414 is realised by a substantially annular body, which has a central axis that is substantially coaxial with the central axis of the cylindrical body 410.

The first cladding wall 414 is for example fixed to the cylindrical body 410, for example sealedly.

It is possible for the first cladding wall 414 to be realised in a single body with the cylindrical body 410.

In the example, the first cladding wall 414 is inserted in the cylindrical body 410 substantially snugly and sealedly, by means of the interposing of a first seal ring 415.

For example, the first cladding wall 414 is fixed to the cylindrical body 410 by means of a further hook 416, for example snap-closing, joint closure or bayonet or threaded closure or the like, for example releasable.

In the illustrated example, the further hook 416, for example of the snap-close type, comprises a plurality of radial seatings realised in one from between the cylindrical body 410 and the first cladding wall 414 and a plurality of corresponding (and alike) radial teeth (flexible in a resilient way) projecting from the other between the first cladding wall 414 and the cylindrical body 410.

The first cladding wall 414, or in any case the housing 41, comprises a cross member 4140, in the example comprising four arms (but which might also have only two or more arms), which intercepts the outlet opening 412.

In practice, the axis of the cross member 4140 (i.e. the axis perpendicular to the lie plane of the cross member 4140, i.e. the arms thereof) is coaxial to the outlet opening 412 (and, therefore, to the cylindrical body 410).

The arms of the cross member 4140 branch directly from the internal edge of the outlet opening 412 defined by the first cladding wall 414 (in a single piece therewith).

Open circular sectors defining overall the outlet opening 412 are defined between the arms of the cross member 4140.

The outlet opening 412 can be axially prolonged towards the outside of the cylindrical body 410 by a tubular portion 4141 that is coaxial to the cylindrical body 410.

The housing 41 can comprise a second cladding wall 417 located at an end (upper) of the cylindrical body, which is for example fixed to the cylindrical body 410.

For example, the inlet opening 411 of the housing 41 is located at an axial height (of the cylindrical body 410) interposed between the first cladding wall 414 and the second cladding wall 417 and, in practice, the chamber 413 is interposed axially between the first cladding wall 414 and the second cladding wall 417.

The second cladding wall 417, in practice, defines a top wall of the cylindrical body 410.

The second cladding wall 417 comprises a through-hole, for example central. The second cladding wall 417 is realised by a substantially annular body, which has a central axis that is substantially coaxial with the central axis of the cylindrical body 410.

The second cladding wall 417 is for example fixed to the cylindrical body 410, for example sealedly.

It is possible for the second cladding wall 417 to be realised in a single body with the cylindrical body 410.

In the example, the second cladding wall 417 is inserted in the cylindrical body 410 substantially snugly and sealedly, by means of the interposing of a second seal ring 418.

For example, the second cladding wall 417 is fixed to the cylindrical body 410 by means of a further hook 419, for example snap-closing, joint closure or bayonet or threaded closure or the like, for example releasable.

In the illustrated example, the further hook 419, for example of the snap-close type, comprises a plurality of radial seatings realised in one from between the cylindrical body 410 and the second cladding wall 417 and a plurality of corresponding (and alike) radial teeth (flexible in a resilient way) projecting from the other between the second cladding wall 417 and the cylindrical body 410.

The bypass valve 40 comprises a first obturator 42 which is configured for selectively opening and closing the outlet opening 412.

The first obturator 42 is therefore mobile (for example slidably in an axial direction) between a closed position and an open position of the outlet opening 412, in which in the closed position the first obturator 42 is arranged sealed against the outlet opening 42, i.e. against a wall of the cylindrical body 410 and/or the first cladding wall 414 which delimits the outlet opening 412, so as to prevent passage of fluid through it, and in the open position the first obturator 42 is arranged distanced from the outlet opening 412, i.e. the distance from the wall of the cylindrical body 410 and/or the first cladding wall 414 which delimits the outlet opening 412 in order to enable passage of fluid through it.

The first obturator 42 is able to close the outlet opening 412 from outside the housing 41, in practice occluding the tubular portion 4141 of the cylindrical body 410.

The first obturator 42 in the example is substantially mushroom-shaped.

For example the first obturator 42 comprises a broadened head 420, having a substantially disc shape (solid and without holes) that is arranged externally of the housing 41 coaxially thereto, i.e. coaxial and externally of the tubular portion 4141 of the cylindrical body 410.

The (external) diameter of the broadened head 420 is greater than the internal diameter of the outlet opening 412, i.e. of the internal diameter of the tubular portion 4141, so that in the closed position of the first obturator 42 the broadened head 420 can remain resting on the wall of the cylindrical body 410, i.e. of the first cladding wall 414, which delimits the outlet opening.

The first obturator 42 also comprises at least a stem 421 which branches from the face of the broadened head 420 facing internally of the housing 41 and is slidably inserted internally of the outlet opening 412.

In the example, the first obturator 42 comprises a plurality of stems 421, for example equal in number to the number of circular sectors which define the outlet opening 412, each of which is inserted in a respective circular sector into which the outlet opening 412 is sub-divided.

In practice, a substantially prismatic sliding couple can be defined between the stems or the stem 421 of the first obturator 42 and the housing 41, which coupling prevents axial rotation of the first obturator 42.

Each stem 421 thus comprises a first axial end constrained to the broadened head 420 and a second axial end opposite the first, substantially free and arranged internally of the chamber 413 of the housing 41.

The second end of each stem 421, for example, comprises a bend or a broadening in a radial direction, in the example in an external direction, which defies a surface 422 (substantially planar and) substantially parallel to the lie plane of the broadened head 420, i.e. perpendicular to the axis of the housing 41 (i.e. to the sliding axis of the first obturator 42) and facing towards the broadened head.

The surface 422 of each stem 421 is therefore in fact facing towards the surface of the cross member 4140 facing towards the inside of the housing 41.

The bypass valve 40 comprises a thrust element configured for exerting a thrust force on the first obturator 42 so as push the first obturator 42 into the closed position thereof.

The thrust element, in the example, comprises a spring 43, for example a compression spring, for example helical.

In this case the thrust force is an elastic force.

For example, the spring 43 is interposed between the cross member 4140, i.e. the surface thereof facing internally of the housing 41, and the surface 422 of each stem 421 of the first obturator 41.

The spring 43 has a predefined elastic constant such as to exert a predefined thrust force on the first obturator 42.

The thrust element can also be of a different nature, for example magnetic, and the thrust force can therefore be a magnetic force.

The bypass valve 40 further comprises a second obturator 44 which is configured for selectively opening and closing the inlet opening 411, for example each inlet opening 411.

In practice, the second obturator 44 is configured to prevent the passage of fluid from the inlet opening 411 to the chamber 413 of the bypass valve 40, when it is closed, and for allowing the passage of fluid from the inlet opening 411 to the chamber 413 of the bypass valve 40, when it is open.

The second obturator 44 is therefore mobile (for example slidably in an axial direction) between a closed position and an open position of the inlet opening 411, in which in the closed position the second obturator 44 is arranged sealed against each inlet opening 411, i.e. against the internal wall of the cylindrical body 410 which delimits the inlet opening 411, so as to prevent passage of fluid through it, and in the open position the second obturator 44 is arranged distanced from the inlet opening 411 in order to enable passage of fluid through it.

More generally, the second obturator 44, when it is situated in the closed position, is adapted to intercept and interrupt the passage of fluid which goes from the inlet opening 411 to the outlet opening 412, i.e. the flow that enters into the chamber 413, while when it is situated in the open position, it allows the passage of fluid which goes from the inlet opening 411 to the outlet opening 412, i.e. the flow that enters into the chamber 413.

The second obturator 44 is axially slidable internally of the housing 41, i.e. the cylindrical body 410 thereof, between a closed position, i.e. an axial position in which it is radially aligned with each inlet opening 411, and at least an open position, in which it frees the inlet opening, i.e. an axial position in which it is radially misaligned with each inlet opening 411, for example it is axially interposed between the inlet opening 411 and the outlet opening 412. The second obturator 44 is able to occlude the inlet opening 411 from inside the housing 41.

The second obturator 44 comprises or is constituted by a discoid body coaxial with the cylindrical body 410 of the housing 41.

The disc body constituting the second obturator 44 has any transversal section with a (circular) shape substantially alike to a shape of any transversal section of the internal cavity of the cylindrical body 410.

In practice, the external diameter of the disc body which constitutes the second obturator 44 is substantially identical to (or a little smaller) than the internal diameter of the cylindrical body 410.

The second obturator 44 is inserted, with a modest amount of play, internally of the housing 41.

The second obturator 44 further comprises at least a through-hole 440 in an axial direction, which for example places an environment of the housing located superiorly of the second obturator 44 in fluid communication with an environment of the housing 41 located inferiorly of the second obturator 44. In the example the second obturator 44 comprises a plurality of through-holes 440.

In practice, each through-hole 440 is able to place the inlet opening 411 in fluid communication with the chamber 413 of the housing 41 when the second obturator 44 is in the open position of the inlet opening 411.

For example, each through-hole 440 is made in an offset position with respect to the central axis of the disc body constituting the second obturator 44.

The bypass valve 40 comprises an actuator group 50 connected to the second obturator 44 and configured so as to enable movement of the second obturator 44 between the closed position and the open position thereof as a function of the temperature of the fluid.

For example, the actuator group 50 comprises a heat-sensitive element configured for varying an own dimension thereof and/or a shape thereof and/or a state thereof and/or a volume thereof as a function of the temperature it is at.

In practice, the heat-sensitive element comprises or is constituted by a heat-extensible body 51, i.e. a body which is expanded with the increase of temperature.

The heat-extensible body 51 is for example reversible, i.e. it is able to pass alternatively between a contracted configuration and an expanded configuration as a function of a temperature thereof.

In the example, the heat-extensible body 51 has a contracted configuration when the temperature thereof, i.e. the temperature of the fluid being filtered, is lower than a predetermined threshold value of the temperature, for example substantially 30°C, and has an expanded configuration when the temperature thereof, i.e. the temperature of the fluid being filtered, is greater than the predetermined threshold value.

In the example illustrated in figures from 2 to 8, the actuator group 50 comprises a diaphragm actuator, for example of the squeeze-push actuator (or a flat diaphragm actuator) type.

In particular, the actuator group 50 comprises an expansion chamber 52 defining a closed volume in which a heat-extensible body 51 is contained, for example a heat-expandable wax, for example in the solid state, the semisolid state or the liquid state (according to the temperature).

The expansion chamber 52 is fixed to the housing 41, for example to the second cladding wall 417 thereof.

The expansion chamber 52 is preferably fixed to the housing 41, for example to the cladding wall 417, externally of the chamber 413 thereof.

The expansion chamber 52 has a tub body 520, substantially rigid and undeformable, the open end of which is closed by a deformable diaphragm 521, for example an elastic membrane.

The open end of the tub body 520 is, in practice, superposed in plan view on the through-hole of the second cladding wall 417.

In the example the diaphragm 521 has (in a non-deformed configuration) a substantially concave shape, with a concavity complementary to the tub body 520.

The volume (variable) interposed between the tub body 520 and the diaphragm 521 is filled by the heat-extensible body 51.

The expansion chamber 52 further comprises a cylindrical guide 522, which is fixed to the open end of the tub body 520, for example coaxial, and projects externally thereof. For example the diaphragm 521 (i.e. the perimeter edge thereof) is sealed and clamped between a perimeter edge of the tub body 520 and a perimeter edge of the cylindrical guide 522.

The cylindrical 522 guide, which is for example defined by a cylindrical bush, is for example coaxial to the cylindrical body 410 of the housing 41.

The cylindrical guide 522 is substantially coaxial to the through-hole of the second cladding wall 417 and prolongs it axially towards the outside of the chamber 413.

A piston 53 is accommodated in the cylindrical guide 522, which is axially slidable along the cylindrical guide 522 and mobile, alternatively, between a retracted position in the expansion chamber 52 and an extracted position therefrom.

In practice, the heat expansion of the heat-extensible body 51 is such as to exert a pressure (for example a crushing compression) on the diaphragm 521, which pushes the piston 53 towards the extracted position.

On the contrary, the heat retraction of the heat-extensible body 51 releases the pressure on the diaphragm 521 and enables the piston 53, as will be more fully described in the following, to return towards the retracted position. The piston 53 is inserted, for example substantially snugly, internally of the through-hole of the second cladding wall 417.

The piston 53 comprises a first end located internally of the expansion chamber 52 (for example passing through the cylindrical guide 522 and external of the chamber 413) and a second end located external of the expansion chamber 52, which is located internally of the chamber 413.

The second end is fixed, for example coaxially, to the second obturator 44, so that a travel of the piston 53 corresponds to a corresponding travel of the second obturator 44.

In practice, the travel of the piston 53 commanded by the heat-extensible body 51 is configured so that in the retracted position of the piston 53 the second obturator 44 is (exactly) in the closed position thereof and in the extracted position of the piston 53 the second obturator 44 is in (any) open position thereof.

To enable the travel from the extracted position to the retracted position of the piston 53, the bypass valve 40 comprises a further thrust element configured for exerting a thrust force on the second obturator 44 so as push the second obturator 44 into the closed position thereof.

The further thrust element, in the example, comprises a further spring 524, for example a compression spring, for example helical.

In this case the thrust force is an elastic force.

For example, the further spring 524 is arranged internally of the chamber 413 and is interposed between the first cladding wall 414, i.e. the surface thereof facing internally of the housing 41, and the second obturator 44, i.e. the surface thereof facing internally of the housing 41 and, therefore on the opposite side with respect to the actuator group 50. The further spring 524 has a predefined elastic constant such as to exert a predefined thrust force on the second obturator 44.

The thrust element can also be of a different nature, for example magnetic, and the thrust force can therefore be a magnetic force.

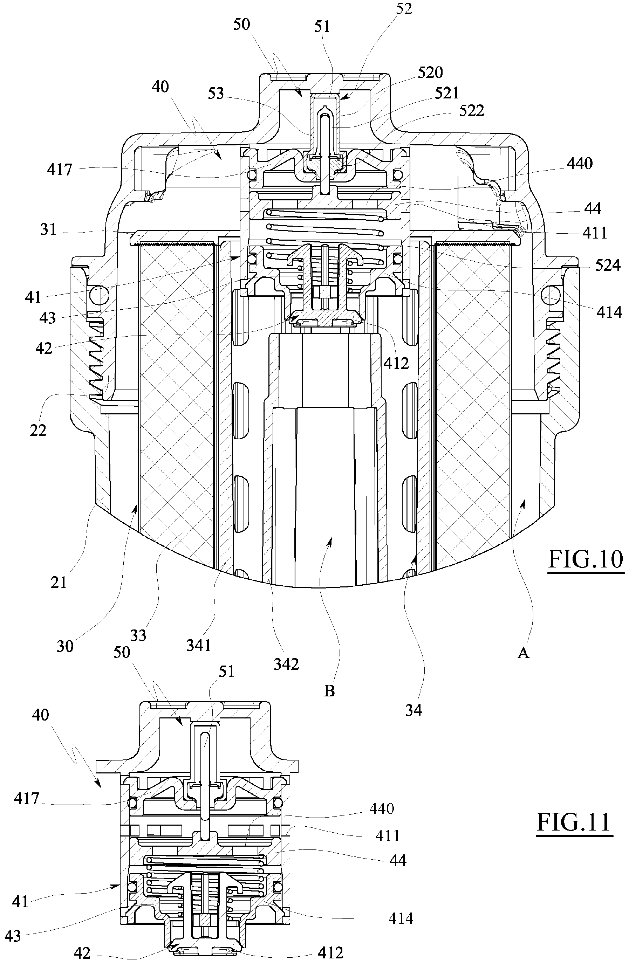

In an alternative embodiment shown schematically in figure 11, the heat-extensible body 51 comprises (or is constituted by) a body, for example longitudinal, having shape memory, which is selectively configurable between a contracted configuration and an elongate configuration as a function of the temperature thereof.

In particular, the heat-extensible body 51 moves into and remains in the contracted configuration thereof when the temperature thereof (and therefore of the fluid surrounding it) is lower than a predetermined threshold value of the temperature itself, for example 30 °C, and moves into the elongate configuration thereof when the temperature thereof (and therefore the fluid surrounding it) is greater than the predetermined threshold value.

The heat-extensible body 51, which for example is located with the longitudinal axis thereof substantially parallel to (and coinciding with) the axis of the housing 41, has a first end (lower) fixed to the second obturator 44 and a second end (upper) solidly fixed to the housing 41, for example directly or by means of rigid connecting elements, for example by means of the cover 22.

The heat-extensible body 51 (i.e. the shape memory body) is, for example, substantially snugly inserted internally of the through-hole of the second cladding wall 417.

The heat-extensible body 51 therefore has the first end thereof located externally of the chamber 413 (for example slidable in a cylindrical guide entirely alike the cylindrical guide 522 described above) and the second end located internally of the chamber 413.

The second end of the heat-extensible body 51 is coaxially fixed to the second obturator 44.

In practice, when the heat-extensible body 51 passes between the contracted configuration and the elongate configuration, the second end of the heat-extensible body 51 varies the distance thereof from the first end (fixed) of the heat-extensible body 51 and thus defines a travel of the second obturator 44 between the closed position and the open position thereof in which it opens the inlet opening 411.

In practice, the length variation in expansion or contraction of the heat-extensible body 51 is configured such that in the contracted configuration of the heat-extensible body 51 the second obturator 44 is (exactly) in the closed position thereof and in the elongate configuration of the heat-extensible body 51 the second obturator 44 is in (any) open position thereof.

The shape memory body can be made for example of a metal alloy having shape memory.

For example the shape memory body can have a prismatic bar shape or a cylindrical shape having any section, or a helical bar, of a spring type, or any elongate shape.

In a case of use of a shape memory body (substantially solid) as a actuator heat-extensible body 51 it is possible to use (and therefore not supply) the further thrust element, i.e. the further spring 524 in the actuator group 50 of the bypass valve 40 (which can even be substantially identical to the one described in the foregoing).

For example, the outlet opening 412 of the bypass valve 40 is located internally of the second chamber B communicating with the outlet conduit 211 and defined internally of the filter cartridge 30.

The inlet opening 411, i.e. each of them, is located internally of the first chamber A communicating with the inlet conduit 210 and defined externally of the filter cartridge 30.

In the illustrated example, the bypass valve 40 is coaxially associated to the filter cartridge 30.

As illustrated in the embodiment shown in figures from 2 to 8, the bypass valve 40 is fixed solidly to the external casing 20 of the filter group 10, in particular to the cover 22 thereof.

In detail, the housing 41 of the bypass valve 40 is defined integrally (in a single piece) with one from between the filter group 21 and the cover 22, preferably the cover 22.

In practice, the housing 41, i.e. the cylindrical body 410 thereof, branches from the internal wall of the cover 22, for example coaxially thereto.

For example, the outlet opening 412 of the housing 41 is located at an (axial) distance from the wall of the cover 22 from which the housing branches 41 that is greater than the (axial) distance between the inlet opening 411 and the wall of the cover 22.

In practice, the outlet opening 412 of the housing 41 is the most distant portion from the wall of the cover 22 from which the housing 41 of the bypass valve 40 branches.

In this embodiment, the bypass valve 40, i.e. the housing 41 thereof, is able to be inserted substantially sealedly (by means of the annular seal) internally of the central hole 310 of the first support plate 31.

In practice, the housing 41 of the bypass valve 40 is able to be inserted in the central hole 310 so that the sealed connection between the central hole 310 and the housing 41, i.e. the annular seal, is axially interposed between the inlet opening 411 and the outlet opening 412, that is, so that the inlet opening 411 is certainly arranged in (or faces) the first chamber A and the outlet opening 412 is certainly arranged in (or faces) the second chamber B.

In this configuration, in practice, the housing 41 of the bypass valve 40 can be inserted also in the support core 34 and, in particular, internally of the first cylindrical body 341, in the zone thereof not involved by the second cylindrical body 342.

In this way, the outlet opening 412 of the bypass valve 40 faces (and is proximal) the mouth of the second cylindrical body 342 of the support core 34, enabling a preferential connection between the chamber 413 of the bypass valve 40 and the outlet conduit 211 of the filter group 20 (by means of the direct connection offered by the second cylindrical body 342).

The tub body 520 of the expansion chamber 52 of the actuator group 50 can be housed in a compartment defined between the second cladding wall 417 and the wall of the cover 22 from which the housing 41 of the bypass valve 40, for example substantially in contact (in abutment) with the wall of the cover 22.

For example, the actuator group 50 is positioned internally of the compartment delimited, for example, (inferiorly) by the second cladding wall 417, (superiorly) by the internal wall of the cover 22 and radially by the wall of the cylindrical body 410 of the housing 41. The compartment can preferably be placed in fluid communication with the first chamber A via small open windows (not shown), for example radial windows fashioned on the cylindrical body 410 (axially interposed between the second cladding wall 417 and the internal wall of the cover 22).

In this way the heat-extensible body 51 can effectively exchange heat with the fluid present in the first chamber A and, thus, be substantially at the same temperature as the fluid being filtered.

In this case, the first obturator 42 and/or the first cladding wall 414 might be fixedly associated (or pre-assembled) to the housing 41 of the bypass valve 40 or, alternatively, might be fixedly associated (or pre-assembled) to the support core 34 and/or the first support plate 31 of the filter cartridge 30.

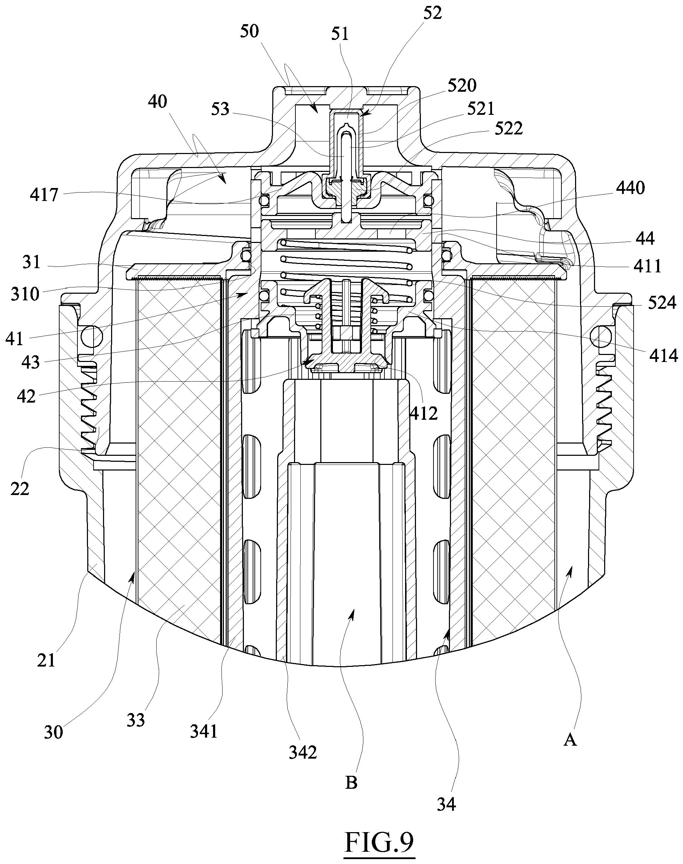

In an alternative embodiment illustrated, for example, in figures 9 and 10, the bypass valve 40 can be solidly fixed to the support core 34 (see figure 9) and/or to the filter cartridge 30 (see figure 10) of the filter group 10.

In the embodiment illustrated in figure 9, for example, the housing 41 of the bypass valve 40 is defined as integral (in a single body) with the support core 34, in particular, with the first cylindrical body 341 thereof.

In practice, the housing 41, i.e. the cylindrical body 410 thereof, branches from the internal wall of the first cylindrical body 341, for example coaxially thereto, prolonging the free end thereof (upper) in an axial direction.

For example, the outlet opening 412 of the housing 41 is radially surrounded (at a distance) by the internal wall of the first cylindrical body 341, while the inlet opening 411 is radially offset with the first cylindrical body, i.e. at a greater height than the free end thereof.

In this embodiment, the bypass valve 40, i.e. the housing 41 thereof, is able to be inserted substantially sealedly (by means of the annular seal) internally of the central hole 310 of the first support plate 31.

In practice, the housing 41 of the bypass valve 40 is able to be inserted in the central hole 310 so that the sealed connection between the central hole 310 and the housing 41, i.e. the annular seal, is axially interposed between the inlet opening 411 and the outlet opening 412, that is, so that the inlet opening 411 is certainly arranged in (or faces) the first chamber A and the outlet opening 412 is certainly arranged in (or faces) the second chamber B.

The tub body 520 of the expansion chamber 52 of the actuator group 50 can be housed in a compartment defined between the second cladding wall 417 and the internal wall of the cover 22, for example substantially in contact (in abutment) with the wall of the cover 22.

For example, the actuator group 50 can be positioned directly internally of the first chamber A fluid-dynamically separated from the chamber 413 of the bypass valve 40 by the second cladding wall 417.

A jointed (and sealed) connection 41 can be included between the cover 22 and the housing 41, realised by mean of a shank realised in the cover 22 in which the end portion of the housing 41 is sealingly insertable.

In this case, the second obturator 44 and/or the actuator group 50 and/or the second cladding wall 417 might be fixedly associated (or pre-assembled) to the housing 41 of the bypass valve 40 or, alternatively, might be fixedly associated (or pre-assembled) to the cover 22 of the external casing 20.

In the embodiment illustrated in figure 10, for example, the housing 41 of the bypass valve 40 is defined as integral (in a single body) with the first support plate 31 of the filter cartridge 30.

In practice, the housing 41, i.e. the cylindrical body 410 thereof, branches from the internal wall of the central hole 310 of the first support plate 31, for example coaxially thereto, prolonging the central hole 310 axially both internally and externally of the filter cartridge 30.

For example, the outlet opening 412 of the housing 41, which is at a lower height than the first support plate 31, can be inserted internally of the support core 34 (i.e. the first cylindrical body 341 thereof) so as to be radially surrounded (at a distance) from the internal wall of the first cylindrical body 341, while the inlet opening 411 is located at a greater height than the first support plate 31.

In practice, the inlet opening 411 is certainly arranged in (or faces) the first chamber A and the outlet opening 412 is certainly arranged in (or faces) the second chamber B.

The tub body 520 of the expansion chamber 52 of the actuator group 50 can be housed in a compartment defined between the second cladding wall 417 and the internal wall of the cover 22, for example substantially in contact (abutting) with the wall of the cover 22.

For example, the actuator group can be positioned directly internally of the first chamber A fluid-dynamically separated from the chamber 413 of the bypass valve 40 by the second cladding wall 417.

In this case too, the second obturator 44 and/or the actuator group 50 and/or the second cladding wall 417 might be fixedly associated (or pre-assembled) to the housing 41 of the bypass valve 40 or, alternatively, might be fixedly associated (or pre-assembled) to the cover 22 of the external casing 20.

A jointed (and sealed) connection 41 can be included between the cover 22 and the housing 41, realised by means of a shank realised in the cover 22 in which the end portion of the housing 41 is sealingly insertable.

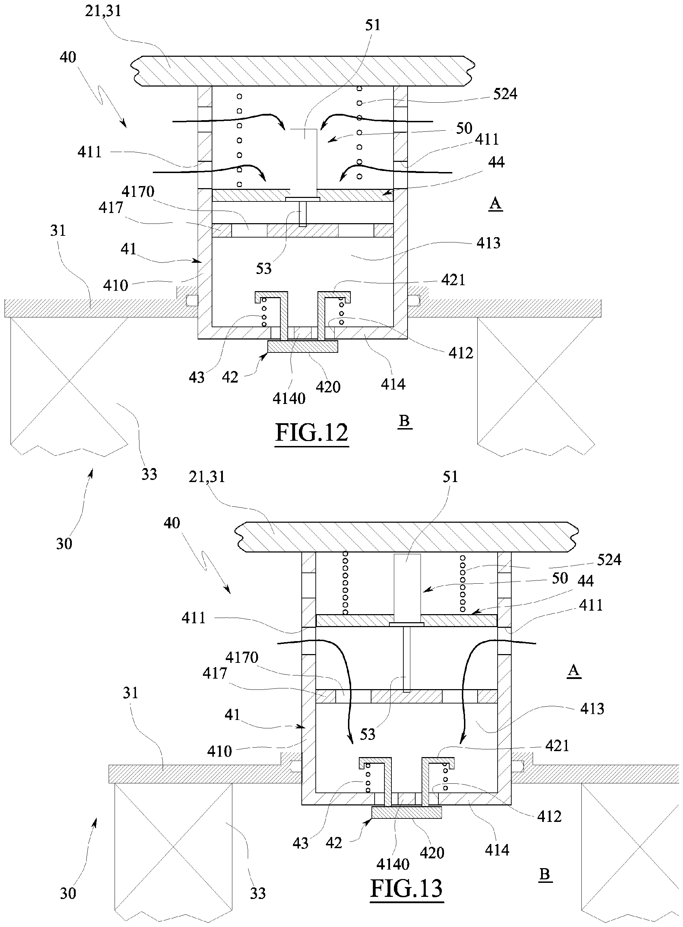

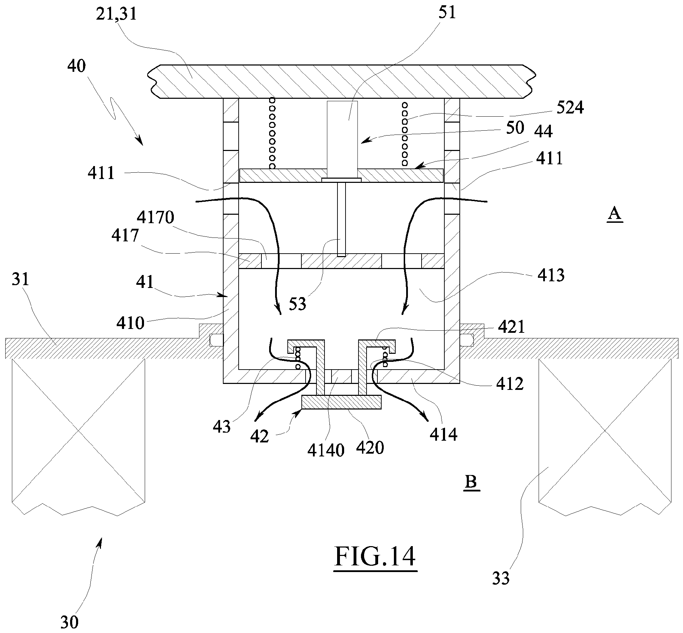

A further embodiment of the bypass valve 40 is illustrated in figures 12 - 14.

Such bypass valve is functionally similar to that previously illustrated and the same reference numbers will be used for the technically or functionally similar or identical elements in the following description.

Also in such embodiment, the bypass valve 40 is configured for bypassing the filter wall 33 and directly placing the inlet conduit 210 in fluid communication with the outlet conduit 211 if necessary, i.e. when the filter wall 33 is obstructed or clogged, so long as the temperature of the fluid is equal to or greater than a threshold temperature.

The bypass valve 40 comprises a housing 41, for example substantially rigid. The housing 41 comprises, for example, a cylindrical body 410 (which is internally hollow), for example having a thin wall and open at the opposite axial ends.

The housing 41 comprises at least one inlet opening 411, which for example is realised at an axial portion of the cylindrical body 410.

The inlet opening 411 is for example a radial opening.

For example, the inlet opening 411 is defined by a through (radial) slit made in the (side) wall of the cylindrical body 410, e.g. at an axially intermediate section between the opposite ends thereof.

In the embodiment, the cylindrical body 410 comprises a plurality of inlet openings 411, e.g. aligned along one or more imaginary circumferences coaxial with the cylindrical body 410.

The inlet opening 411 can also be axial (as an alternative to or in addition to the radial opening).

The housing 41 comprises at least one outlet opening 412, which for example is realised at a further axial portion of the cylindrical body 410, different from the axial portion in which the inlet opening 411 is realised.

For example, the outlet opening 412 is defined at one (lower) open end of the cylindrical body 410, for example at a bottom wall of the housing 41 (and/or of the cylindrical body 410).

The outlet opening 412 is for example an axial opening.

Nevertheless, the outlet opening 412 can also be of radial type.

The housing 41 comprises an internal chamber 413, which is for example axially interposed between the inlet opening 411 and the outlet opening 412 and is perimetrically delimited by the internal wall of the cylindrical body 410. The housing 41 can comprise a first cladding wall 414 placed at a (lower) end of the cylindrical body 410, which is for example fixed to the cylindrical body itself.

The first cladding wall 414, in practice, defines a bottom wall of the cylindrical body 410.

The first cladding wall 414 comprises a through hole, e.g. central, which in fact defines the outlet opening 412 of the housing 41, which for example has a diameter smaller than the internal diameter of the cylindrical body 410.

The first cladding wall 414 is realised by a substantially annular body, which has a central axis substantially coaxial with the central axis of the cylindrical body 410.

The first cladding wall 414 is realised integrally with the cylindrical body 410. The first cladding wall 414 can also be realised in a body separate from the cylindrical body (as shown in the preceding examples), for example fixed to the cylindrical body 410, e.g. sealedly.

The first cladding wall 414, or in any case the housing 41, comprises a cross member 4140, in the embodiment comprising four arms (but there could also be only two arms, or more arms), which intercepts the outlet opening 412.

In practice, the axis of the cross member 4140 (i.e. the axis orthogonal to the lie plane of the cross member 4140, i.e. the arms thereof) is coaxial to the outlet opening 412 (and, therefore, to the cylindrical body 410).

The arms of the cross member 4140 branch directly from the internal edge of the outlet opening 412 defined by the first cladding wall 414 (in a single piece therewith).

Open circular sectors defining overall the outlet opening 412 are defined between the arms of the cross member 4140.

The housing 41 can comprise a second cladding wall 417 placed at an axially intermediate portion of the cylindrical body 410, which is for example fixed to the cylindrical body itself (or made integrally therewith).

For example, the second cladding wall 417 of the housing 41 is placed at an axial height (of the cylindrical body 410) interposed between the first cladding wall 414 and the inlet opening 411 and, in practice, the chamber 413 is axially interposed between the first cladding wall 414 and the height of the cylindrical body 410 where the inlet opening 411 is realised and axially divided by the second cladding wall 417.

The second cladding wall 417 comprises one through hole 4170 (or multiple through holes), e.g. eccentric.

The second cladding wall 417 is realised by a substantially annular body, which has a central axis substantially coaxial with the central axis of the cylindrical body 410. The second cladding wall 417 is for example fixed to the cylindrical body 410 by means of a hook, e.g. snap-coupling, joint closure, bayonet, threaded closure or the like, for example soluble. The bypass valve 40 comprises a first obturator 42 which is configured for selectively opening and closing the outlet opening 412.

The first obturator 42 is, therefore, movable (e.g. slidably in axial direction) between a closed position and an open position of the outlet opening 412, wherein in the closed position the first obturator 42 is arranged sealedly against the outlet opening 412, i.e. against a wall of the cylindrical body 410 and/or of the first cladding wall 414 which delimits such outlet opening 412, in a manner so as to prevent the passage of fluid through it, and in the open position the first obturator 42 is arranged distanced from the outlet opening 412, i.e. at a distance from the wall of the cylindrical body 410 and/or of the first cladding wall 414 which delimits such outlet opening 412, in order to enable the passage of fluid through it.

The first obturator 42 is adapted to obstruct the outlet opening 412 from outside the housing 41.

The first obturator 42 in the example is substantially mushroom-shaped.

For example, the first obturator 42 comprises an broadened head 420, having a substantially disc shape (solid and without holes) that is arranged outside the housing 41 and coaxially thereto, i.e. coaxial and outside the cylindrical body 410.

The (external) diameter of the broadened head 420 is greater than the internal diameter of the outlet opening 412, in a manner such that in the closed position of the first obturator 42 the broadened head 420 can remain abutted against the wall of the cylindrical body 410, i.e. of the first cladding wall 414, which delimits the outlet opening itself.

The first obturator 42 then comprises at least one stem 421 which branches from the face of the broadened head 420 facing towards the interior of the housing 41 and is slidably inserted within the outlet opening 412.

In the embodiment, the first obturator 42 comprises a plurality of stems 421, for example equal in number to the number of circular sectors which define the outlet opening 412, each of which inserted in a respective circular sector into which the outlet opening 412 is sub-divided.

In practice, a substantially prismatic sliding coupling can be defined between the stems or the stem 421 of the first obturator 42 and the housing 41, and such coupling prevents axial rotation of the first obturator 42.

Each stem 421 thus comprises a first axial end constrained to the broadened head 420 and a second axial end opposite the first, substantially free and arranged within chamber 413 of the housing 41.

The second end of each stem 421, for example, comprises a bend or a broadening in a radial direction, in the embodiment in an external direction, which defines a surface 422 (substantially planar and) substantially parallel to the lie plane of the broadened head 420, i.e. perpendicular to the axis of the housing 41 (i.e. to the sliding axis of the first obturator 42) and facing towards the broadened head itself.

The surface 422 of each stem 421 is therefore in fact facing towards the surface of the cross member 4140 facing towards the inside of the housing 41.

The bypass valve 40 comprises a thrust element configured for exerting a thrust force on the first obturator 42 so as push the first obturator 42 into the closed position thereof.

The thrust element, in the example, comprises a spring 43, for example a compression spring, for example helical.

In this case the thrust force is an elastic force.

For example, the spring 43 is interposed between the cross member 4140, i.e. the surface thereof facing towards the interior of the housing 41, and the surface 422 of each stem 421 of the first obturator 41.

The spring 43 has a predefined elastic constant such as to exert a predefined thrust force on the first obturator 42.

The thrust element can also be of a different nature, for example magnetic, and the thrust force can therefore be a magnetic force.

The bypass valve 40 further comprises a second obturator 44 which is configured for selectively opening and closing the inlet opening 411, for example each inlet opening 411.

In practice, the second obturator 44 is configured for preventing the passage of fluid from the inlet opening 411 to the chamber 413 of the bypass valve 40, when it is closed, and for allowing the passage of fluid from the inlet opening 411 to the chamber 413 of the bypass valve 40, when it is open.

In practice, the second obturator (and its actuator group) is configured in a manner such that in the closed position it prevents the access of fluid to the chamber 413 and in the open position it allows the fluid to access the chamber 413.

The second obturator 44 is, therefore, movable (e.g. slidably) of the inlet opening 411.

In the closed position the second obturator 44 is arranged sealedly against a portion of the internal wall of the cylindrical body 410, in the embodiment, axially interposed between the inlet opening 411 and the outlet opening 412 or, more in detail, between the inlet opening 411 and the second cladding wall 417, in a manner so as to prevent the passage of fluid from the inlet opening 411 to the chamber 413.

Alternatively or additionally, it is possible that in the closed position the second obturator 44 is placed against each inlet opening 411, i.e. against the internal wall of the cylindrical body 410 which delimits the inlet opening 411, in a manner so as to prevent the passage of fluid through it, and in the open position the second obturator 44 is arranged at a distance from the inlet opening 411, in order to allow the passage of fluid through it.

In the open position, the second obturator 44 is arranged (sealedly against a portion of the internal wall of the cylindrical body 410) at a height such that the inlet opening 411 is axially interposed between the second obturator 44 (i.e. its lower surface) and the outlet opening 412 or, more in detail, between the second obturator 44 (i.e. its lower surface) and the second cladding wall 417, in a manner so as to allow the passage of fluid from the inlet opening 411 to the chamber 413.

The second obturator 44 is axially slidable within the housing 41, i.e. the cylindrical body 410 thereof, between the closed position, in the embodiment an axial position in which it is situated radially misaligned with each inlet opening 411 and axially interposed between the inlet opening 411 and the second cladding wall 417, and the open position, in which it frees the occlusion between the inlet opening 411 and the chamber 413, and in the embodiment it is situated in an axial position in which it is radially misaligned with each inlet opening 411, e.g. it is axially interposed between the inlet opening 411 and the end of the cylindrical body 410 that is opposite the end thereof provided with the outlet opening 412.

The second obturator 44 is adapted to occlude the inlet opening 411 from within the housing 41.

The second obturator 44 comprises or is constituted by a discoid body coaxial with the cylindrical body 410 of the housing 41.

The disc body constituting the second obturator 44 has any transversal section with a (circular) shape substantially alike to a shape of any transversal section of the internal cavity of the cylindrical body 410.

In practice, the external diameter of the disc body which constitutes the second obturator 44 is substantially identical to (or a little smaller) than the internal diameter of the cylindrical body 410.

The second obturator 44 is inserted, with a modest amount of play, within the housing 41.

The bypass valve 40 comprises an actuator group 50 connected to the second obturator 44 and configured for allowing the movement of the second obturator 44 between the closed position and the open position thereof as a function of the temperature of the fluid.

For example, the actuator group 50 comprises a heat-sensitive element configured for varying the size thereof and/or the shape thereof and/or state thereof and/or the allotropic form thereof and/or the volume thereof as a function of the temperature it is at.

In practice, the heat-sensitive element comprises or is constituted by a heat-extensible body 51, i.e. a body that is expanded with the increase of temperature.

The heat-extensible body 51 is for example reversible, i.e. it is able to pass alternatively between a contracted configuration and an expanded configuration as a function of a temperature thereof.

The heat-extensible body 51 is placed above the upper surface of the second obturator 44 in order to be situated immersed in the fluid coming from the chamber A in fluid communication with the inlet conduit 210. In the embodiment, the heat-extensible body 51 has a contracted configuration when the temperature thereof, i.e. the temperature of the fluid being filtered, is lower than a predetermined threshold value of the temperature, for example substantially 30°C, and has an expanded configuration when the temperature thereof, i.e. the temperature of the fluid being filtered, is greater than the predetermined threshold value.

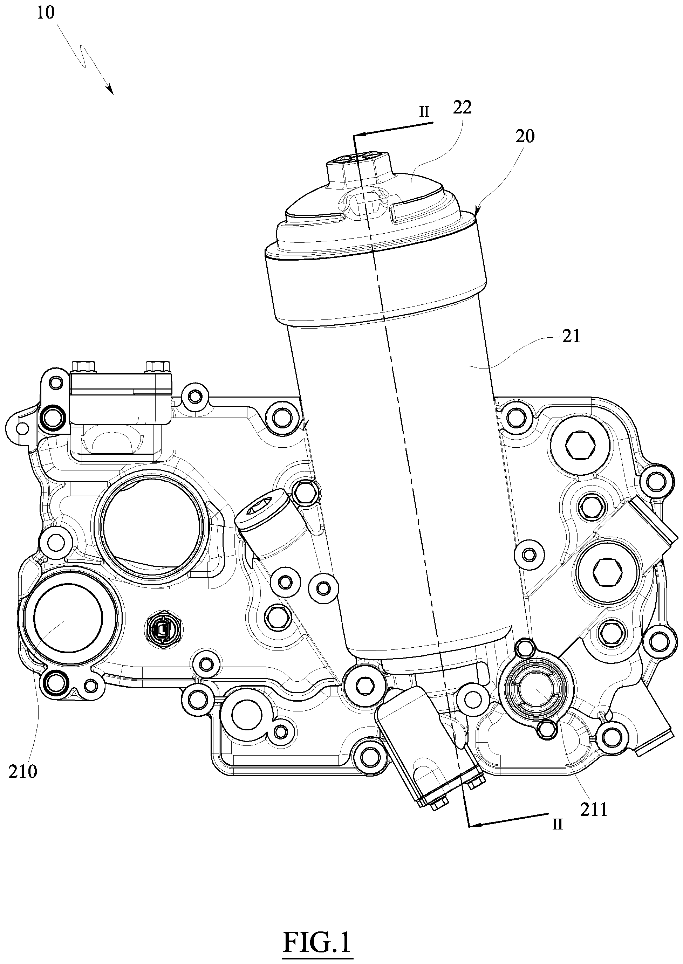

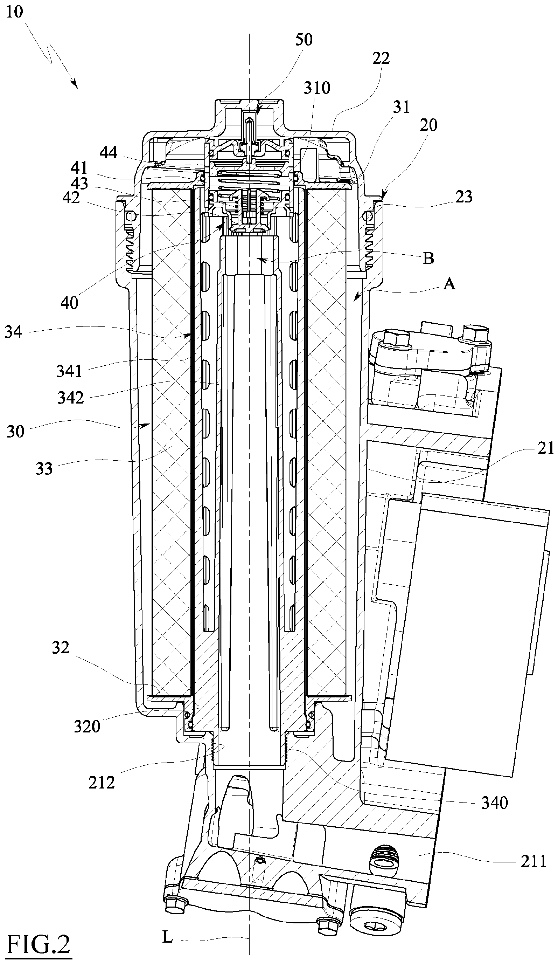

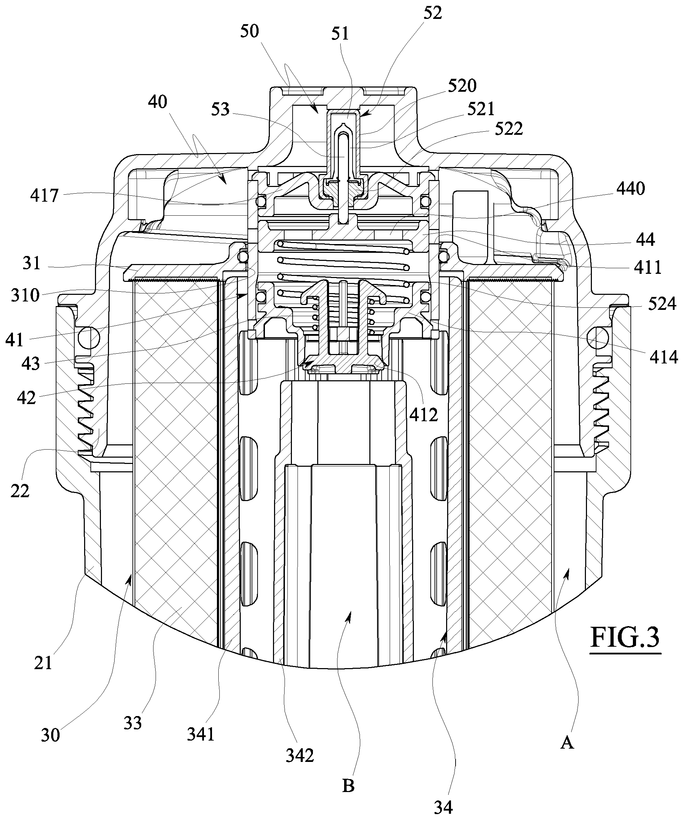

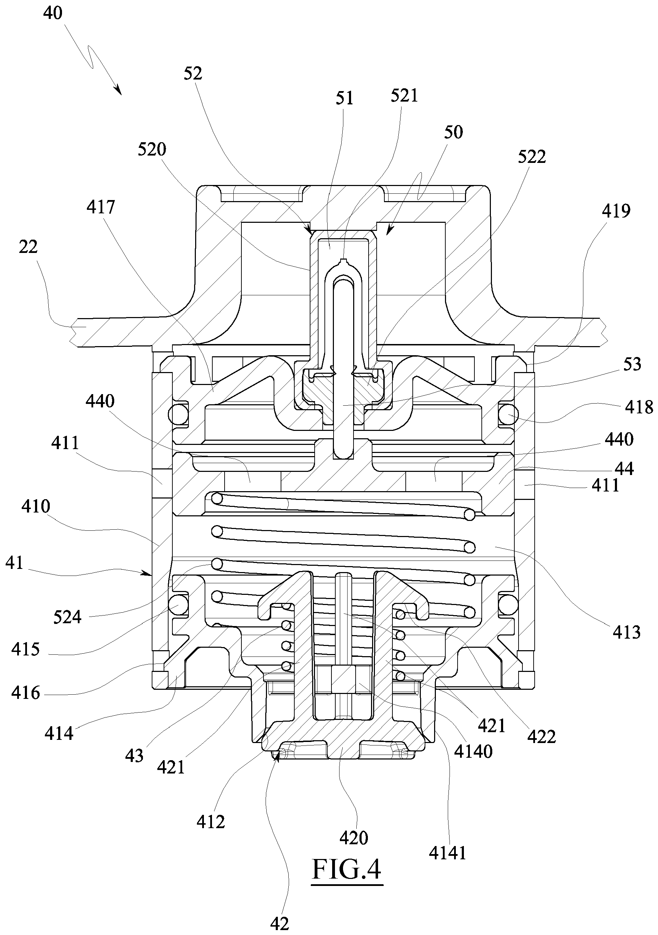

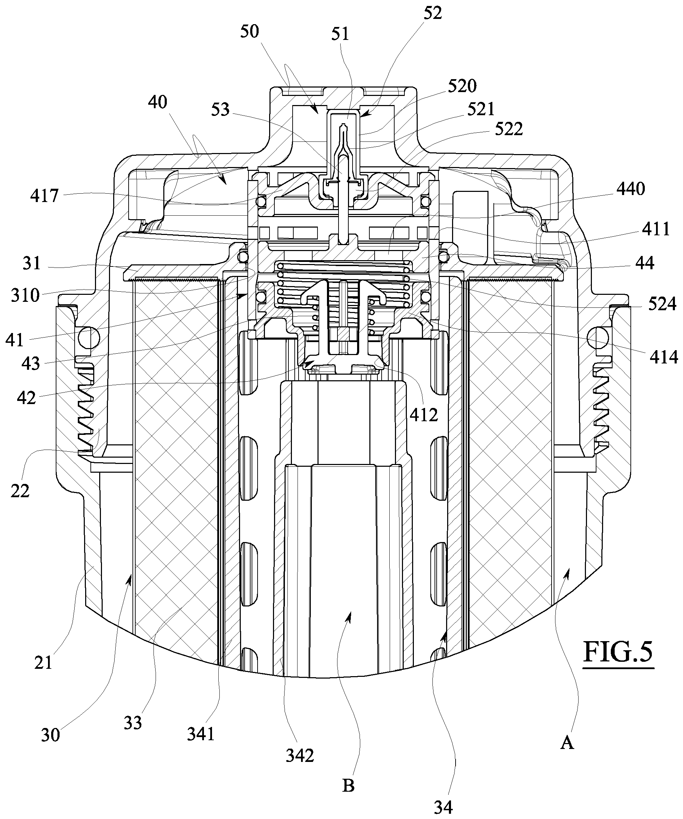

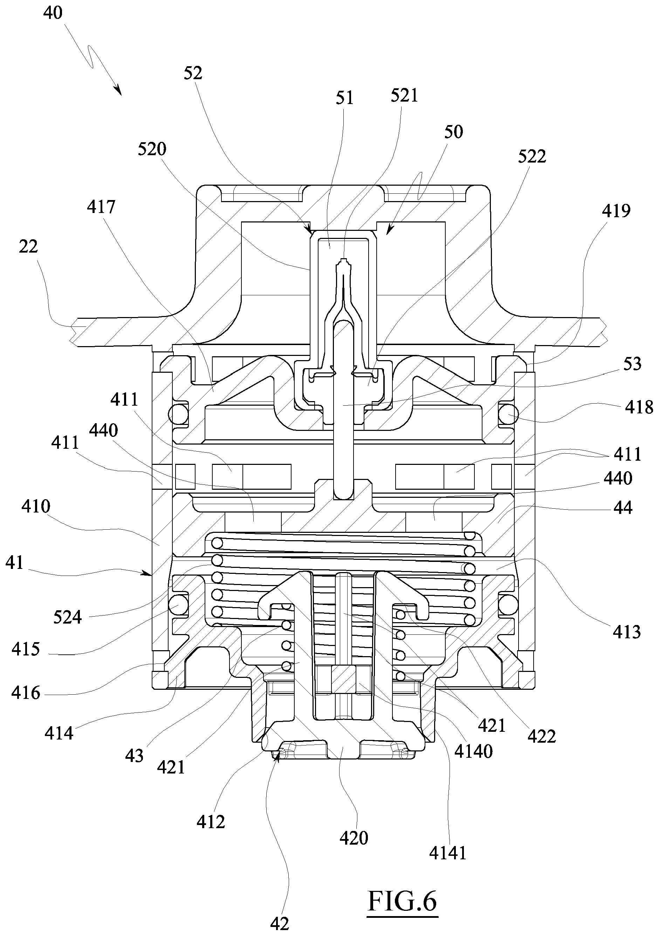

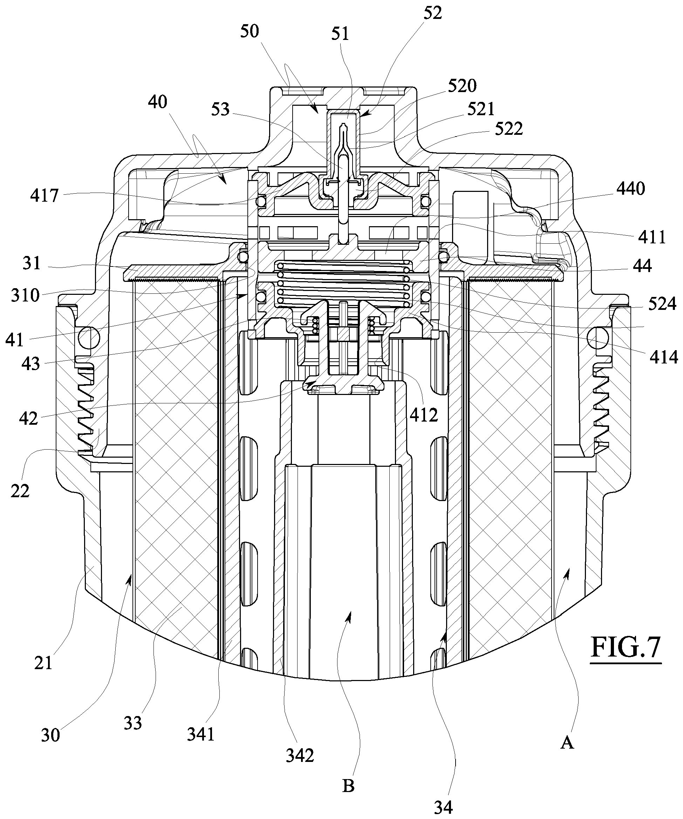

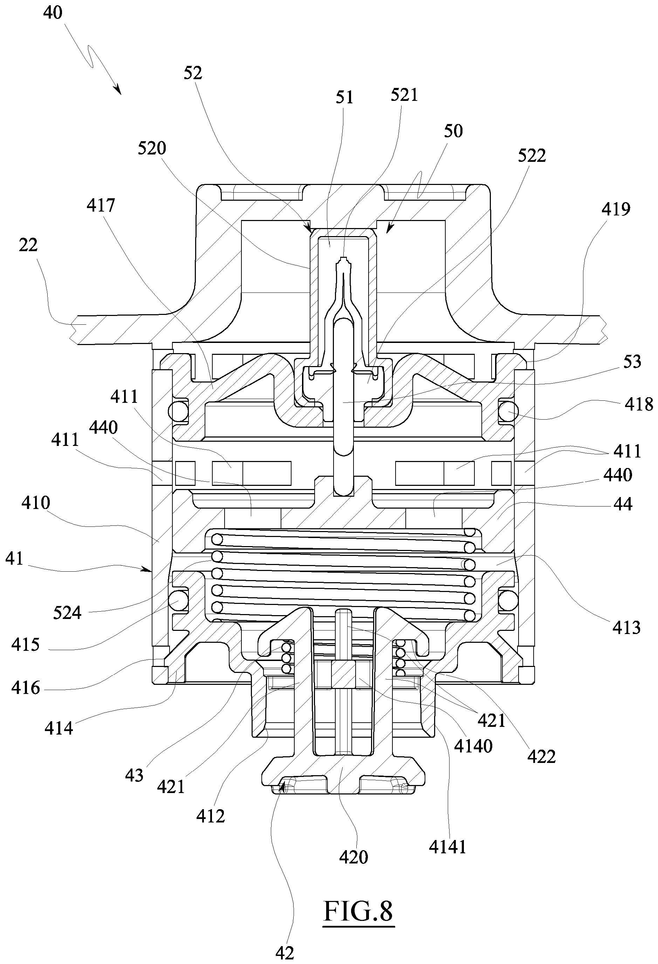

The actuator group 50 schematically shown in figures 12 - 14 is entirely analogous or identical to that shown in figures 1-11 and, therefore, is not depicted in detail.

The actuator group 50 comprises a diaphragm actuator, for example of squeeze-push actuator (or flat diaphragm actuator) type.

In particular, the actuator group 50 comprises an expansion chamber 52 defining a closed volume in which a heat-extensible body 51 is contained, for example a heat-expandable wax, for example in the solid state, the semisolid state or the liquid state (according to the temperature).

The expansion chamber is fixed to the second obturator 44.

Preferably the expansion chamber is fixed to the second obturator 44, at the surface thereof facing towards the inlet opening 411, for example coaxial with the cylindrical body 410.

The expansion chamber has a tub body, substantially rigid and non-deformable, whose open end is closed by a deformable membrane, for example an elastic membrane.

In the embodiment, the membrane has (in non-deformed configuration) a substantially concave shape with concavity consistent with the tub body. The (variable) volume interposed between the tub body and the membrane is filled by the heat-extensible body.

The expansion chamber also comprises a cylindrical guide, which is fixed to the open end of the tub body, e.g. coaxial, and is externally projecting thereof. For example, the membrane (i.e. its perimeter edge) is sealed and retained clamped between a perimeter edge of the tub body and a perimeter edge of the cylindrical guide.

The cylindrical guide, which is for example defined by a cylindrical bush, is for example coaxial with the cylindrical body 410 of the housing 41.

A piston 53 is received with the cylindrical guide, which is axially slidable along the cylindrical guide itself and alternatively movable between a retracted position in the expansion chamber and a position that is extracted therefrom.

In practice, the heat expansion of the heat-extensible body is such as to exert a pressure (for example a crushing compression) on the membrane, which pushes the piston towards the extracted position.

On the contrary, the heat retraction of the heat-extensible body releases the pressure on the membrane and allows the piston 53, as will be more fully described in the following, to return towards the retracted position.

The piston 53 comprises a first end placed inside the expansion chamber (for example passing through the cylindrical guide) and a second end placed outside the expansion chamber.

The second end is fixed, for example coaxially, to the second cladding wall 417, in a manner such that a travel of the piston 53 corresponds with a corresponding travel of the second obturator 44.

In practice, the travel of the piston 53 commanded by the heat-extensible body 51 is configured so that in the retracted position of the piston the second obturator 44 is exactly in the closed position thereof and in the extracted position of the piston the second obturator 44 is in (any) open position thereof.

To enable the travel from the extracted position to the retracted position of the piston 53, the bypass valve 40 comprises a further thrust element configured for exerting a thrust force on the second obturator 44 so as push the second obturator 44 into the closed position thereof.

The further thrust element, in the embodiment, comprises a further spring 524, for example a compression spring, for example helical.

In this case the thrust force is an elastic force.

For example, the further spring 524 is arranged within the cylindrical body 410 and is interposed between a bottom wall of the cylindrical body 410 (opposite the bottom wall comprising the outlet opening 412) and the second obturator 44, i.e. the surface thereof facing towards the exterior of the chamber 413 and, therefore, on the opposite side with respect to the actuator group 50. The further spring 524 has a predefined elastic constant such as to exert a predefined thrust force on the second obturator 44.

The thrust element can also be of a different nature, for example magnetic, and the thrust force can therefore be a magnetic force.

In an entirely analogous manner to that described in the embodiment of figure 11, also for the bypass valve 40 shown in figures 12 and 13, the heat-extensible body 51 could comprise (or be constituted by) a body, for example longitudinal, with shape memory, which is selectively configurable between a contracted configuration and an elongate configuration as a function of the temperature thereof.

In particular, the heat-extensible body 51 moves into and remains in the contracted configuration thereof when the temperature thereof (and therefore of the fluid surrounding it) is lower than a predetermined threshold value of the temperature itself, for example 30°C, and moves into the elongate configuration thereof when the temperature thereof (and therefore the fluid surrounding it) is greater than the predetermined threshold value.

In the light of the foregoing, the functioning of the bypass valve 40 and the filter group 10 is as follows.

When the filter group 10 is assembled a pressurised fluid is injected into the external casing 20 via the inlet conduit 210.

Initially, the first obturator 42 and the second obturator 44 of the bypass valve 40 are both in the respective closed positions, respectively of the outlet opening 412 and of the inlet opening 411.

On first use of the filter group 10 (i.e. the first use of the engine) or each time the temperature of the fluid being filtered (oil) is lower than the predetermined threshold value of the temperature (e.g. 30°C), the second obturator 44 is in and remains in the closed position of the inlet opening 411.

When the second obturator 44 is in the closed position of the inlet opening 411 any fluid present in the chamber 413 is substantially at atmospheric pressure.

Further, the chamber 413 is totally closed and inaccessible for the unfiltered fluid present in the first chamber A of the external casing 20.

As the fluid being filtered gradually heats up, for example while the engine is functioning, the filter group 10 and all the components thereof also heat up, in particular the heat-extensible body 51 (because the fluid when entering the compartment in which the heat-extensible body 51 is housed flows against it and enables heat transfer), which heat-extensible body 51 on expanding activates the second obturator 44 from the closed position to the open position of the inlet opening 411.

In practice, fluid coming from the first chamber A (of the non-filtered fluid) now starts flowing through the now-open inlet opening 411 and through each through-hole 440 of the second obturator 44 into the chamber 413 of the housing 41 of the bypass valve 40.

When the second obturator 44 is in the closed position of the inlet opening 411 any fluid present in the chamber 413 is brought to a pressure (greater than atmospheric pressure) equal to the pressure of the fluid to be filtered in the first chamber A (pressure generated by a recycling pump of the engine lubricating fluid).

If the pressure of the fluid to be filtered in the first chamber A does not exceed the threshold value of the pressure itself, the first obturator 42 is maintained in the closed position thereof of the outlet opening 412.

When the bypass valve 40 is substantially closed, i.e. when the first obturator 42 and the second obturator 44 are both in the respective closed positions and when the second obturator 44 is in the open position thereof and the first obturator 42 is in the closed position thereof, the fluid being filtered present in the first chamber A, coming from the inlet conduit 210, is forced to cross the filter wall 33 so as to pass, filtered, into the second chamber B and from there (along the second cylindrical body 342) towards the outlet conduit 211. During the use of the filter group 10, the filter wall 33 becomes fouled and will progressively become clogged, causing the fluid-dynamic resistance exerted thereby on the fluid being filtered to grow.

When the fluid-dynamic resistance of the filter wall 33 is such as to increase the pressure of the fluid to be filtered in the first chamber A (and therefore in the chamber 413 of the bypass valve 40) above the threshold value thereof, i.e. the value corresponding to the thrust force exerted by the spring 43 on the first obturator 42, the second obturator 42 is brought, in contrast the action of the spring 43, into the open position thereof.

With the second obturator 42 in the open position, therefore, outflow of the unfiltered liquid (preferential) is enabled from the first chamber A to the second chamber B through the inlet opening 411 (opened by the second obturator 44), the chamber 413 and the outlet opening 412.

When the bypass valve 40 is substantially open, i.e. when the first obturator 42 and the second obturator 44 are both in the respective open positions, the non-filtered fluid present in the first chamber A, coming from the inlet conduit 210, preferentially will cross the bypass valve 44 and will pass, unfiltered, into the second chamber B and from there (along the second cylindrical body 342) towards the outlet conduit 211.

The illustrated bypass valve 40 is completely reversible, for which: each time the value of the pressure in the chamber 413 (and/or in the first chamber A) falls below the threshold value of the pressure, the first obturator 42 is moved, by action of the spring 43, into the closed position thereof; and each time the temperature value of the fluid (i.e. the heat-extensible body 51) falls below the threshold value of the temperature, the second obturator 44 moves, for example by action of the further spring 524, into the closed position thereof (for example independently of the fluid pressure).

## Claims

1. A bypass valve (40), comprising:
- a housing (41) provided with an inlet opening (411) for a fluid, an outlet opening (412) for the fluid and a chamber (413) interposed between the inlet opening (411) and the outlet opening (412);
- a first obturator (42), mobile between a closed position of the outlet opening (412) and an open position of the outlet opening (412), as a function of a pressure value of the fluid internally of the chamber (413); and
- a second obturator (44), mobile between a closed position of the inlet opening (411) and an open position of the inlet opening (411), as a function of a temperature value of the fluid, **characterized in that** the second
obturator (44) is configured to be positioned in the closed position of the inlet opening (411) when the temperature of the fluid being filtered is lower than a predetermined threshold value thereof and in the open position of the inlet opening (411) when the temperature of the fluid being filtered is equal to or greater than said predetermined threshold value.

2. The bypass valve (40) of claim 1, which comprises a first thrust element (43) exerting a predetermined thrust force on the first obturator (42) so as to push the first obturator (42) into the closed position thereof.

3. The bypass valve (40) of claim 2, wherein the first thrust element comprises a spring (43).

4. The bypass valve (40) of claim 1, which comprises an actuator group (50) connected to the second obturator (44) and configured so as to enable movement of the second obturator (44) between the closed position and the open position thereof as a function of the temperature of the fluid.

5. The bypass valve (40) of claim 4, wherein the first actuator group (50) comprises a heat-sensitive element provided with a heat-extensible body (51).

6. The bypass valve (40) of claim 5, wherein the actuator group (50) comprises an expansion chamber (52) fixed to the housing (41) and a piston (53) slidably coupled to the expansion chamber (52) between a retracted position and an extracted position thereof, and connected to the second obturator (44), wherein the piston (53) is activated in sliding by the heat-extensible body (51) between the retracted position, corresponding to the closed position of the second obturator (44) and the extracted position, corresponding to the open position of the second obturator (44).

7. The bypass valve (40) of claim 5, wherein the heat-extensible body (51) comprises a shape-memory body an end of which is fixed to the second obturator (44) and a second end of which is fixed to the housing (41).

8. The bypass valve (40) according to claim 1, wherein the housing (41) comprises an internally-hollow cylindrical body (410); the inlet opening (411) is realised in an axial portion of the cylindrical body (410) and the outlet opening (412) is realised in a further axial portion of the cylindrical body (410); the chamber (413) is axially interposed between the inlet opening (411) and the outlet opening (412) and is perimetrically delimited by the internal wall of the cylindrical body (410); the second obturator (44) is axially slidable within the cylindrical body (410) between the open position of the inlet opening (411) and the closed position of the inlet opening (411).

9. The bypass valve (40) according to claim 1, wherein the second obturator (44) is configured in a manner such that in the closed position it prevents the passage of fluid from the inlet opening (411) to the chamber (413) and in the open position it allows the passage of fluid from the inlet opening (411) to the chamber (413).

10. A filter group (10) for filtering a fluid comprising an external casing (20) provided with an inlet (220) and an outlet (221), a filter cartridge (30) contained internally of the external casing (20) able to separate the internal volume of the external casing (20) into a first chamber (A) communicating with the inlet (220) and a second chamber (B) communicating with the outlet (221), so as to filter the fluid that flows from the inlet (220) towards the outlet (221), and a bypass valve (40), according to any one of the preceding claims, wherein the inlet opening (411) of the bypass valve (40) is arranged in the first chamber (A) and the outlet opening (412) is arranged in the second chamber (B).

11. The filter group (10) of claim 10, wherein the housing (41) of the bypass valve (40) is fixed to at least a portion (22,34) of the external casing (20).

12. The filter group (10) of claim 10, wherein the housing (41) of the bypass valve (40) is fixed to at least a portion (31,34) of the filter cartridge (30).

## Patentansprüche

1. Bypassventil (40), umfassend:
- ein Gehäuse (41), das mit einer Einlassöffnung (411) für ein Fluid, einer Auslassöffnung (412) für das Fluid und einer zwischen der Einlassöffnung (411) und der Auslassöffnung (412) zwischengestellten Kammer (413) versehen ist;
- einen ersten Obturator (42), der zwischen einer geschlossenen Position der Auslassöffnung (412) und einer geöffneten Position der Auslassöffnung (412) abhängig von einem Druckwert des Fluids im Inneren der Kammer (413) beweglich ist; und
- einen zweiten Obturator (44), der zwischen einer geschlossenen Position der Einlassöffnung (411) und einer geöffneten Position der Einlassöffnung (411) abhängig von einem Temperaturwert des Fluids beweglich ist, **dadurch gekennzeichnet, dass** der zweite Obturator (44) konfiguriert ist, um in der geschlossenen Position der Einlassöffnung (411) positioniert zu werden, wenn die Temperatur des Fluids, das gefiltert wird, niedriger als ein vorbestimmter Schwellenwert davon ist, und in der geöffneten Position der Einlassöffnung (411) positioniert zu werden, wenn die Temperatur des Fluids, das gefiltert wird, gleich wie oder größer als der vorbestimmte Schwellenwert ist.

2. Bypassventil (40) nach Anspruch 1, das ein erstes Schubelement (43) umfasst, das eine vorbestimmte Schubkraft auf den ersten Obturator (42) ausübt, um den ersten Obturator (42) in seine geschlossene Position zu schieben.

3. Bypassventil (40) nach Anspruch 2, wobei das erste Schubelement eine Feder (43) umfasst.

4. Bypassventil (40) nach Anspruch 1, das eine Betätigungsgruppe (50) umfasst, die mit dem zweiten Obturator (44) verbunden und konfiguriert ist, um eine Bewegung des zweiten Obturators (44) zwischen seiner geschlossenen und seiner geöffneten Position abhängig von der Temperatur des Fluids zu ermöglichen.

5. Bypassventil (40) nach Anspruch 4, wobei die erste Betätigungsgruppe (50) ein wärmeempfindliches Element umfasst, das mit einem wärmeausdehnbaren Körper (51) bereitgestellt ist.

6. Bypassventil (40) nach Anspruch 5, wobei die Betätigungsgruppe (50) eine Expansionskammer (52), die an dem Gehäuse (41) befestigt ist, und einen Kolben (53), der gleitend mit der Expansionskammer (52) zwischen einer eingezogenen Position und einer ausgefahrenen Position davon gekoppelt ist, umfasst und mit dem zweiten Obturator (44) verbunden ist, wobei der Kolben (53) durch den wärmeausdehnbaren Körper (51) zwischen der eingezogenen Position, die der geschlossenen Position des zweiten Obturators (44) entspricht, und der ausgefahrenen Position, die der geöffneten Position des zweiten Obturators (44) entspricht, gleitend aktiviert wird.

7. Bypassventil (40) nach Anspruch 5, wobei der wärmeausdehnbare Körper (51) einen Formgedächtniskörper umfasst, wovon ein Ende an dem zweiten Obturator (44) und ein zweites Ende an dem Gehäuse (41) befestigt ist.

8. Bypassventil (40) nach Anspruch 1, wobei das Gehäuse (41) einen innen hohlen zylindrischen Körper (410) umfasst; die Einlassöffnung (411) in einem axialen Abschnitt des zylindrischen Körpers (410) ausgeführt ist und die Auslassöffnung (412) in einem weiteren axialen Abschnitt des zylindrischen Körpers (410) ausgeführt ist; die Kammer (413) axial zwischen der Einlassöffnung (411) und der Auslassöffnung (412) zwischengestellt ist und perimetrisch durch die Innenwand des zylindrischen Körpers (410) begrenzt ist; der zweite Obturator (44) innerhalb des zylindrischen Körpers (410) zwischen der geöffneten Position der Einlassöffnung (411) und der geschlossenen Position der Einlassöffnung (411) axial gleitfähig ist.

9. Bypassventil (40) nach Anspruch 1, wobei der zweite Obturator (44) konfiguriert ist, um in der geschlossenen Position den Durchgang von Fluid von der Einlassöffnung (411) zu der Kammer (413) zu verhindern und in der geöffneten Stellung den Durchgang von Fluid von der Einlassöffnung (411) zu der Kammer (413) zuzulassen.

10. Filtergruppe (10) zum Filtern eines Fluids, umfassend ein Außengehäuse (20), das mit einem Einlass (220) und einem Auslass (221) versehen ist, eine Filterkartusche (30), die im Inneren des Außengehäuses (20) enthalten ist und in der Lage ist, das Innenvolumen des Außengehäuses (20) in eine erste Kammer (A), die mit dem Einlass (220) in Verbindung ist, und eine zweite Kammer (B), die mit dem Auslass (221) in Verbindung ist, zu trennen, um das Fluid zu filtern, das von dem Einlass (220) zu dem Auslass (221) fließt, und ein Bypassventil (40) nach einem der vorherigen Ansprüche, wobei die Einlassöffnung (411) des Bypassventils (40) in der ersten Kammer (A) angeordnet ist und die Auslassöffnung (412) in der zweiten Kammer (B) angeordnet ist.

11. Filtergruppe (10) nach Anspruch 10, wobei das Gehäuse (41) des Bypassventils (40) an mindestens einem Abschnitt (22, 34) des Außengehäuses (20) befestigt ist.

12. Filtergruppe (10) nach Anspruch 10, wobei das Gehäuse (41) des Bypassventils (40) an mindestens einem Abschnitt (31, 34) der Filterkartusche (30) befestigt ist.

## Revendications

1. Soupape de dérivation (40), comprenant :
- un logement (41) doté d'un orifice d'admission (411) pour un fluide, d'un orifice de sortie (412) pour le fluide et d'une chambre (413) interposée entre l'orifice d'admission (411) et l'orifice de sortie (412) ;
- un premier obturateur (42), mobile entre une position fermée de l'orifice de sortie (412) et une position ouverte de l'orifice de sortie (412), en fonction d'une valeur de pression du fluide à l'intérieur de la chambre (413) ; et
- un second obturateur (44), mobile entre une position fermée de l'orifice d'admission (411) et une position ouverte de l'orifice d'admission (411), en fonction d'une valeur de température du fluide, **caractérisée en ce que** le second obturateur (44) est configuré de façon à être positionné dans la position fermée de l'orifice d'admission (411) lorsque la température du fluide étant filtré est inférieure à une valeur seuil prédéterminée de ce dernier et dans la position ouverte de l'orifice d'admission (411) lorsque la température du fluide étant filtré est égale ou supérieure à ladite valeur seuil prédéterminée.

2. Soupape de dérivation (40) selon la revendication 1, qui comprend un premier élément de poussée (43) exerçant une force de poussée prédéterminée sur le premier obturateur (42) afin de pousser le premier obturateur (42) dans la position fermée de ce dernier.

3. Soupape de dérivation (40) selon la revendication 2, dans laquelle le premier élément de poussée comprend un ressort (43).

4. Soupape de dérivation (40) selon la revendication 1, qui comprend un groupe d'actionneurs (50) connecté au second obturateur (44) et configuré de façon à permettre le mouvement du second obturateur (44) entre la position fermée et la position ouverte de ce dernier en fonction de la température du fluide.

5. Soupape de dérivation (40) selon la revendication 4, dans laquelle le premier groupe d'actionneurs (50) comprend un élément thermosensible doté d'un corps extensible à la chaleur (51).

6. Soupape de dérivation (40) selon la revendication 5, dans laquelle le groupe d'actionneurs (50) comprend une chambre d'expansion (52) fixée sur le logement (41) et un piston (53) couplé de manière coulissante à la chambre d'expansion (52) entre une position retractée et une position déployée de ce dernier et connecté au second obturateur (44), dans laquelle le piston (53) est activé en coulissement par le corps extensible à la chaleur (51) entre la position retractée, correspondant à la position fermée du second obturateur (44), et la position déployée, correspondant à la position ouverte du second obturateur (44).

7. Soupape de dérivation (40) selon la revendication 5, dans laquelle le corps extensible à la chaleur (51) comprend un corps à mémoire de forme dont une extrémité est fixée sur le second obturateur (44) et dont une seconde extrémité est fixée sur le logement (41).

8. Soupape de dérivation (40) selon la revendication 1, dans laquelle le logement (41) comprend un corps cylindrique creux à l'intérieur (410) ; l'orifice d'admission (411) est réalisé dans une partie axiale du corps cylindrique (410) et l'orifice de sortie (412) est réalisé dans une partie axiale supplémentaire du corps cylindrique (410) ; la chambre (413) est axialement interposée entre l'orifice d'admission (411) et l'orifice de sortie (412) et est délimitée de façon périmétrique par la paroi interne du corps cylindrique (410) ; le second obturateur (44) peut axialement coulisser au sein du corps cylindrique (410) entre la position ouverte de l'orifice d'admission (411) et la position fermée de l'orifice d'admission (411).

9. Soupape de dérivation (40) selon la revendication 1, dans laquelle le second obturateur (44) est configuré de sorte que dans la position fermée il empêche le passage du fluide de l'orifice d'admission (411) vers la chambre (413) et dans la position ouverte il permette le passage du fluide de l'orifice d'admission (411) vers la chambre (413).

10. Groupe de filtres (10) pour la filtration d'un fluide comprenant un carter externe (20) doté d'une entrée (220) et d'une sortie (221), une cartouche de filtre (30) contenue à l'intérieur du carter externe (20) apte à séparer le volume interne du carter externe (20) dans une première chambre (A) communiquant avec l'entrée (220) et une seconde chambre (B) communiquant avec la sortie (221), de façon à filtrer le fluide qui s'écoule de l'entrée (220) vers la sortie (221), et une soupape de dérivation (40), selon l'une quelconque des revendications précédentes, dans laquelle l'orifice d'admission (411) de la soupape de dérivation (40) est placé dans la première chambre (A) et l'orifice de sortie (412) est placé dans la seconde chambre (B).

11. Groupe de filtres (10) selon la revendication 10, dans lequel le logement (41) de la soupape de dérivation (40) est fixé sur au moins une partie (22, 34) du carter externe (20).

12. Groupe de filtres (10) selon la revendication 10, dans lequel le logement (41) de la soupape de dérivation (40) est fixé sur au moins une partie (31, 34) de la cartouche de filtre (30).
